# EUROPEAN PATENT SPECIFICATION

(11) **EP 2 909 603 B1**
(45) Date of publication and mention of the grant of the patent: **01.02.2017**
(21) Application number: 13802221.5
(22) Date of filing: 11.10.2013
(51) Int. Cl.: G01N 3/34

(54) **A DEVICE FOR FATIGUE BENDING TESTS**
VORRICHTUNG FÜR ERMÜDUNGSBIEGETESTS
DISPOSITIF POUR EFFECTUER DES ESSAIS DE FATIGUE PAR FLEXION

(30) Priority: 12.10.2012 CZ 20120696
(43) Date of publication of application: 26.08.2015
(73) Proprietor: Univerzita J. E. Purkyne V Usti Nad Labem, 40096 Usti nad Labem (CZ)
(72) Inventor: VYSLOUZIL, Tomas, 41501 Teplice (CZ); APETAUR, Milan, 13000 Praha 3 (CZ)
(74) Representative: Kratochvil, Vaclav
(86) International application number: PCT/CZ2013/000126
(87) International publication number: WO 2014/056462

(56) References cited:
- DE-A1- 4 323 718
- DE-A1- 19 857 025
- DE-A1-102007 047 500
- DE-C- 564 117
- DE-C- 676 444
- SU-A1- 657 320
- US-A- 3 605 488
- US-A- 5 872 318

## Description

### Technical field

The invention relates to a device for fatigue bending tests, particularly for analysing and monitoring the impact of structural keys on the carrying capacity and lifetime of workpieces.

### State of the art

Existing devices for bending fatigue tests, used to analyse and monitor the impact of structural keys on the carrying capacity and lifetime of workpieces, comprise a drive shaft and a support bearing. A weight is suspended or load force is applied in the centre of the test bar, resulting in alternating bending when rotating the bar. No other type of the test device is known.

A disadvantage of this device is the maximum load in the centre of the test bar where the load is deployed. For keyed test bars, the maximum load is applied on the key and there is a problem with deploying the weight without affecting the site of the key. The key can be placed outside the weight area, but it is necessary to recalculate the load on the site of the key and objectivity of the test is questionable.

The structure of the device is rather simple; it concerns the lodging of the test bar in a bearing on one side and in the clamping section of the drive on the other side. A change of the load is discharged as a change of the weight suspended on the bearing, placed in the centre of the bar. Structurally, it is necessary to fix the position of the bearing with the weight. The test does not conform to the actual load of the real component; it has comparable results to those of the S-N curve and the determination of the fatigue limit. The test is not suitable for keyed components. When using the device, the weight and the central mounting shall be secured in case of bending of the test bar so as to prevent injury or damage to the device. The load is therefore discharged hydraulically and is therefore more complicated. Then, however, if the bar bursts, the loading pull is interrupted.

Current devices use either bending of the test bar by turning the clamping heads during their rotation or loading of the test bar by means of weight in the centre of the sample, in two points. The above-mentioned devices are manufactured abroad.

The former device concerns a specifically loaded test sample; bar deformation is caused by turning the clamping heads of the sample during their rotation. The turning is created by a mechanism at several different angles. The simplicity of the test, including the clamping of the test sample, is an advantage. A specific load that does not correspond with the real bending while the machine components are rotating is a disadvantage. The device cannot be used to analyse keyed samples.

The other device type models typical fatigue test cases of bending during rotation. It is a fairly complex device with the advantage of a wide range of loads. Despite the feasibility of bending tests during rotation, once again this device is not suitable for analysis and fatigue tests of keyed components. The load would have to be applied at the key, thereby distorting the test results. In this case, it would have to be spot load, which the device is incapable of implementing.

The inventor certificate SU-657320 discloses a prior art fatigue bending test for a pipe with one fixed end and the other end loaded by a rotating mechanism of two eccentrics. The bending moment is registered by strain gauges at the support of the fixed end, while liquid in the pipe is pressurized.

### Disclosure of Invention

The deficiencies mentioned above are, to a large extent, eliminated by a device for fatigue bending tests based on this technical solution. Its essence is that it comprises a bed with an electric motor, with a drive shaft provided with an eccentric flange and a clamping tip for clamping the test bar, where a cage with a chuck is installed at the clamping tip for clamping the test bar and a three-axis force sensor is installed to monitor the load on both load axes of movement.

Advantageously, the flanges have a different eccentricity, from 0.5 to 5mm. The electric motor is advantageously provided with stepless speed control.

The test bar can be keyed for fatigue testing of keyed components. The shape and size of the key is not a problem for the test.

A device for fatigue bending test as specified in this technical solution is used to analyse and monitor the effects of structural keys on the carrying capacity and lifetime of workpieces and to analyse the effects of key manufacture and workmanship quality on the fatigue properties of the material. Sensors monitor the load in both bending axes subject to loading. The flanges are interchangeable, with various sizes of eccentricity, such as 0.5:1:2:3 mm. Electric motor control is stepless and a broad time load of the components can be used. When the test piece is provided with a structural key, it is possible to test the effects of different key designs, different manufacturing technologies on the lifetime of the loaded components. The device can also be used for normal cyclic bending tests.

The device is more complex compared with the existing types of devices. This is associated, however, with repeatability, wide usage and high correlation to the actual loads of the real components. The price of the device does not differ from that of the existing device too much; the biggest part of the price is attributable to the sensor assembly, including amplifiers, and transfer to computer. The device provides fault-free operation and high safety with a switch that disconnects the drive if the load drops to 10%. The device has a long lifetime, depending mostly on the quality of sensors and the quality of the chuck. The device has a high precision thanks to its rigid structure and quality of sensors. The usability of the device is wider compared to the currently used design - test bars with structural, process keys, keyless, different types of designs with a simple method of manufacture of the test bar - the basic design of the rotating part without other elements.

### Clarification of Drawings

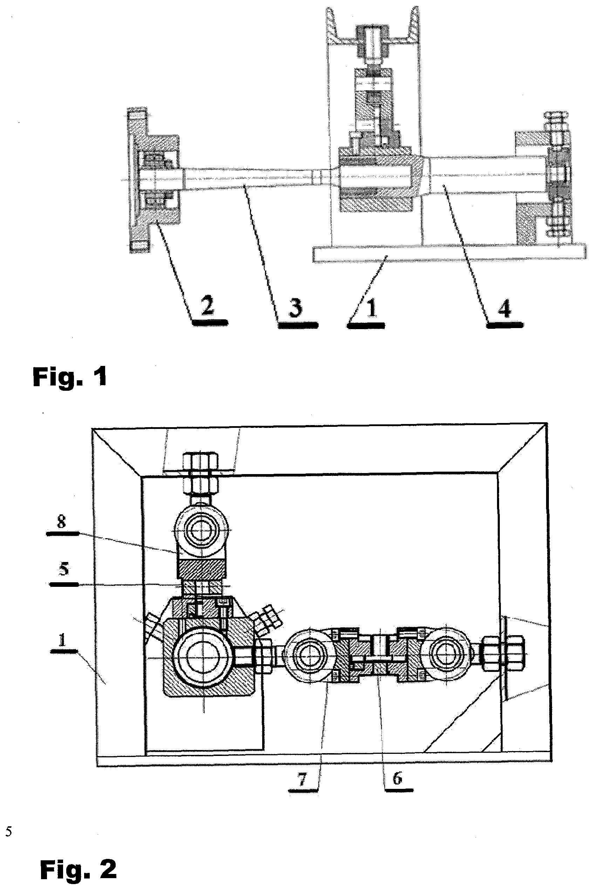

The device for fatigue bending tests as specified in this invention will be described in greater detail on a specific embodiment with accompanying drawings, where figure 1 shows schematically the device in plan view and figure 2 shows the device in side view.

### Embodiments of the invention

The guide bush **4** is fixed in the frame **1** of the device by means of an articulated horizontal strap **7** and the articulated vertical strap **8**. One part of the test piece **3** is inserted in the guide bush **4**, the other part of the test piece **3** is inserted into the bearing of the eccentric flange **2**. The eccentric flange **2** is driven by an electric motor with stepless speed control or an electric motor via a gearbox. The load on the fold of the test piece **3** is recorded by the sensor **6** in the direction of horizontal X-axis and by another sensor **5** in the direction of vertical Y-axis. The signal from sensors **6** and **5** is fed to the amplifier and visualized or recorded using a computer, and then analysed.

An embodiment of the device for fatigue bending tests comprises a frame **1** with an electric motor with a drive shaft, provided with an eccentric flange **2**, inside of which there is a bearing for lodging and clamping one side of the test piece **3** in the form of a bar. The guide bush **4** is placed in a cage **9**, which is connected to a horizontal strap **7** and a vertical strap **8** with a frame **1** of the device. A quick-acting bush **10** is inserted into the front of the guide bush **4** to clamp the test piece **3**. The vertical strap **8** and the horizontal strap **7** contain a three-axis Kistler force sensor to monitor the load in both loaded axes of movement. The eccentricity of flanges **2** is in increments of 0.5mm. The electric motor has stepless speed control via a gearbox.

The test piece **3** can be keyed for fatigue testing of keyed components.

The dimensions of the frame **1** for fixing horizontal straps **7** and vertical straps **8** are 500 x 350mm. The eccentric flange **2** has a diameter of 200mm, with a bearing SKF 2307 lodged inside. The test piece **3** in the form of a bar with a diameter of 30mm is inserted in the bearing. The test piece **3** has a length of 320mm, the other end of the test piece **3** is clamped in a quick-acting bush **10** Spieth 8504. The test pieces **3** - bars can be made of steel and nonferrous metals, smooth or keyed.

### Industrial Applicability

A device for fatigue bending tests as specified in this invention can be used for analysing and monitoring the effect of structural keys on the carrying capacity and lifetime of workpieces. The device can be used for normal cyclic bending tests of materials, for tests when a material in a structure is replaced to compare its dynamic properties and for determining the effect of material processing on the fatigue properties of the material.

## Claims

1. A device for fatigue bending tests, comprising a frame (1) with an electric motor with a drive shaft provided with an eccentric flange (2) and a guide bush (4) for clamping the test piece (3), wherein a chuck (10) is installed in the guide bush (4) for clamping the test piece (3), ***characterized in that*** the guide bush (4) is placed in a cage (9) and a horizontal strap (7) and a vertical strap (8) are attached to the cage (9); the straps are provided with three-axis force sensors to monitor the load in both load axes of movement with the frame (1) of the device.

2. The device as in Claim 1, ***wherein*** the flange (2) has an eccentricity of 0.5 to 5mm.

3. The device as in Claim 1 or 2, ***wherein*** the test piece (3) is clamped by a tapered cavity.

4. The device as in any of the above Claims, ***wherein*** the cage (9) is coupled to the frame (1) by means of articulated horizontal straps (7) and vertical straps (8).

5. The device as in any of the above Claims, ***wherein*** the electric motor is provided with stepless speed control.

6. The device as in any of the above Claims, ***wherein*** the test piece (3) in the form of a bar is keyed for the fatigue test of keyed components.

## Patentansprüche

1. Die Vorrichtung für Dauerbiegeprüfungen, bestehend aus einem Rahmen (1) mit dem Elektromotor mit der Antriebswelle, ausgerüstet mit einem exzentrischen Flansch (2) und einer Führungsbuchse (4) zur Aufnahme des Prüfkörpers (3), ***dadurch gekennzeichnet, dass*** die Führungsbuchse (4) im Käfig (9) angeordnet ist, an dem ein horizontaler Bügel (7) und ein vertikaler Bügel (8) angeschlossen sind, die mit den Drei-Achsen-Kraftgebern zur Überwachung des Verlaufs der Belastung in beider Lastachsen der Bewegung mit dem Rahmen (1) der Vorrichtung ausgerüstet sind.

2. Die Vorrichtung nach dem Anspruch 1, ***dadurch gekennzeichnet, dass*** der Flansch (2) die Exzentrizität von 0,5 bis 5 mm aufweist.

3. Die Vorrichtung nach dem Anspruch 1 oder 2, ***dadurch gekennzeichnet, dass*** die Aufnahme des Prüfkörpers (3) aus einem konischen Hohlraum besteht.

4. Die Vorrichtung nach einem der angeführten Ansprüche, ***dadurch gekennzeichnet, dass*** die Verbindung des Käfigs (9) mit dem Rahmen (1) der Vorrichtung durch horizontale Scharnierbögen (7) und vertikale Bügel (8) gebildet wird.

5. Die Vorrichtung nach einem der angeführten Ansprüche, ***dadurch gekennzeichnet, dass*** der Elektromotor zur stufenlosen Drehzahländerung vorgesehen wird.

6. Die Vorrichtung nach einem der angeführten Ansprüche, ***dadurch gekennzeichnet, dass*** der Prüfkörper (3) in der Form eines Stabes ist und dass er mit der Kerbe zur Dauerbiegeprüfung der gekerbten Bestandteile ausgestattet ist.

## Revendications

1. Le dospositif pour les essais de fatigue à la flexion, comportant un cadre (1) avec un électromoteur à l'arbre d'entraînement, équipé d'une bride excentrique (2) et de douille de guidage (4) pour la fixation du corps d'essai (3), ***se caractérisant par* le fait que** la douille de guidage (4) se situe dans une cage (9) à laquelle un étrier horizontal (7) et un étrier vertical (8) sont fixés, équipés de capteurs à trois axes pour le suivi de processus de charge dans les deux axes de charge avec le cadre (1) du dispositif.

2. Le dispositif selon la revendication 1, ***se caractérisant par*** la bride (2) à l'excentricité de 0,5 à 5 mm.

3. Le dispositif selon la revendication 1 ou 2, ***se caractérisant par* le fait que** la fixation du corps d'essai (3) est constituée par une cavité conique.

4. Le dispositif selon une des revendications précédentes, ***se caractérisant par* le fait que** l'assemblage de la cage (9) avec le cadre (1) du dispositif est constitué d'étriers horizontaux articulés (7) et d'étriers verticaux (8).

5. Le dispositif selon une des revendications précédentes, ***se caractérisant par* le fait que** l'électromoteur est pourvu d'une régulation du changement continu des tours.

6. Le dispositif selon une des revendications précédentes, ***se caractérisant par* le fait que** le corps d'essai (3) a la forme de barre et qu'il est pourvu d'une entaille pour l'essai de fatigue des parties entaillées.
